# EUROPÄISCHE PATENTSCHRIFT

(11) **EP 3 174 195 B1**
(45) Veröffentlichungstag und Bekanntmachung des Hinweises auf die Patenterteilung: **08.07.2020**
(21) Anmeldenummer: 15196051.5
(22) Anmeldetag: 24.11.2015
(51) Int. Cl.: H02P 27/18, H02P 27/16, H02P 1/02, H02P 1/24

(54) **VERFAHREN UND VORRICHTUNG ZUM BETREIBEN EINES ELEKTROMOTORS**
METHOD AND DEVICE FOR OPERATING AN ELECTRIC MOTOR
PROCÉDÉ ET DISPOSITIF DE FONCTIONNEMENT D'UN MOTEUR ÉLECTRIQUE

(43) Veröffentlichungstag der Anmeldung: 31.05.2017
(73) Patentinhaber: Wöhner GmbH & Co. KG Elektrotechnische Systeme, 96472 Rödental (DE)
(72) Erfinder: Steiner, Daniel, 96529 Mengersgereuth-Hämmern (DE); Steinberger, Philipp, 96450 Coburg (DE); Lenker, Hubert, 96515 Sonneberg (DE)
(74) Vertreter: Isarpatent

(56) Entgegenhaltungen:
- WO-A1-01/48908
- WO-A2-01/89074
- DE-A1- 3 427 479
- DE-A1-102008 057 701
- US-A1- 2007 046 247
- US-A1- 2015 333 663

## Beschreibung

Verfahren und Vorrichtung zum Betreiben eines Elektromotors Die Erfindung betrifft ein Verfahren und eine Vorrichtung zum Betreiben eines Elektromotors und insbesondere eine Motorstarteinrichtung zum Starten eines Elektromotors. Motorstarteinrichtungen kommen typischerweise in der Automatisierungs- und Steuerungstechnik zur Ansteuerung von Pumpen, Lüftern, Transportbändern, Rührwerken, Wickelmaschinen, Trennwerkzeugen oder sonstiger Werkzeuge zum Einsatz. Es werden dabei zunehmend Elektromotoren mit einem höheren Wirkungsgrad eingesetzt. So weisen beispielsweise sogenannte IE3-Motoren einen höheren Wirkungsgrad auf als IE2-Elektromotoren. Die in der Herstellung aufwendigeren IE3-Motoren haben einen höheren Wirkungsgrad, benötigen jedoch im Direktstarterbetrieb deutlich höhere Anlaufströme. Ferner dürfen die in ihrer Herstellung weniger aufwendigen IE2-Motoren zukünftig nur mittels Drehzahlregelung gestartet werden.

Die Offenlegungsschrift DE 10 2008 057 701 A1 offenbart ein Verfahren zum Betreiben eines Elektromotors mit den Schritten:
(a) Ermitteln von Nulldurchgängen und Phasenwinkeln von angelegten phasenverschobenen sinusförmigen Spannungsphasen eines mehrphasigen Spannungsversorgungsnetzes; und (
b) Durchschalten von Halbwellen der angelegten sinusförmigen Spannungsphasen mittels Halbleiterschaltern entsprechend an die Halbleiterschalter angelegter Schaltmuster, die auf die ermittelten Phasenwinkel und Nulldurchgänge synchronisiert werden, zum Erzeugen von phasenverschobenen sinusformähnlichen Spannungsphasen, die direkt an den Elektromotor angelegt werden, wobei die Frequenz der sinusformähnlichen Spannungsphasen zum Anlaufen des Elektromotors stufenweise durch Umschalten der an die Halbleiterschalter angelegten Schaltmuster hochgeschaltet wird, bis die Netzfrequenz des Spannungsversorgungsnetzes erreicht wird.

Die Offenlegungsschrift WO 01/89074 A2 offenbart eine Motorsteuerung, bei der mechanische Kontakte parallel zu Halbleiterschaltern verschaltet sind.

Es ist daher eine Aufgabe der vorliegenden Erfindung, eine Vorrichtung und ein Verfahren zu schaffen, welche die Anlaufströme beim Starten bzw. Anlaufen des Elektromotors reduzieren.

Diese Aufgabe wird erfindungsgemäß durch ein Verfahren zum Betreiben eines Elektromotors mit den in Patentanspruch 1 angegebenen Merkmalen gelöst.

Durch das erfindungsgemäße Verfahren werden die beim Anlaufen des Elektromotors auftretenden Anlaufströme reduziert. Dies bietet den Vorteil, dass das Anlaufen des Elektromotors schonend erfolgt.

Bei einer möglichen Ausführungsform des erfindungsgemäßen Verfahrens weisen die erzeugten phasenverschobenen sinusformähnlichen Spannungsphasen untereinander die gleiche Frequenz auf, welche ein Bruchteil der Netzfrequenz des mehrphasigen Spannungsversorgungsnetzes ist.

Bei einer weiteren möglichen Ausführungsform des erfindungsgemäßen Verfahrens werden die Halbleiterschalter durch galvanisch getrennte Leistungshalbleiter gebildet, die entsprechend einem aus einem Datenspeicher ausgelesenen Schaltmuster angesteuert werden.

Bei einer weiteren möglichen Ausführungsform des erfindungsgemäßen Verfahrens wird die erste Halbwelle und/oder die letzte Halbwelle einer sinusförmigen Spannungsphase, die mittels der Halbleiterschalter entsprechend dem angelegten Schaltmuster durchgeschaltet wird, zur Erzeugung der sinusformähnlichen Spannungsphasen angeschnitten.

Bei einer weiteren möglichen Ausführungsform des erfindungsgemäßen Verfahrens weisen die sinusformähnlichen Spannungsphasen zueinander jeweils einen Phasenwinkel von etwa 120° auf.

Bei einer weiteren möglichen Ausführungsform des erfindungsgemäßen Verfahrens wird beim Umschalten der an die Halbleiterschalter angelegten Schaltmuster der Drehsinn eines Drehfeldes zum Antrieb des Elektromotors beibehalten.

Die Erfindung schafft ferner eine Vorrichtung zum Betreiben eines Elektromotors mit den in Patentanspruch 7 angegebenen Merkmalen.

Bei einer möglichen Ausführungsform der erfindungsgemäßen Vorrichtung ist eine Steuereinheit vorgesehen, die Halbleiterschalter der Schalteinheit entsprechend den aus einem Datenspeicher ausgelesenen Schaltmustern ansteuert.

Bei einer weiteren möglichen Ausführungsform der erfindungsgemäßen Vorrichtung ist eine Wendestufe zur Einstellung eines Drehsinns eines Drehfeldes zum Antrieb des Elektromotors vorgesehen.

Bei einer weiteren möglichen Ausführungsform der erfindungsgemäßen Vorrichtung ist eine Überlastschutzstufe vorgesehen.

Im Weiteren werden mögliche Ausführungsformen des erfindungsgemäßen Verfahrens und der erfindungsgemäßen Vorrichtung zum Betreiben eines Elektromotors sowie der Motorstarteinrichtung zum Starten eines Elektromotors unter Bezugnahme auf die beigefügten Figuren näher erläutert.

Es zeigen:
- Fig. 1: ein einfaches Blockschaltbild zur Darstellung eines Ausführungsbeispiels der erfindungsgemäßen Vorrichtung zum Betreiben eines Elektromotors;
- Fig. 2: ein Blockschaltbild zur Darstellung eines Ausführungsbeispiels einer erfindungsgemäßen Motorstarteinrichtung, welche eine Vorrichtung zum Betreiben eines Elektromotors verwendet;
- Fig. 3: ein Schaltbild zur Darstellung eines Ausführungsbeispiels einer bei der erfindungsgemäßen Motorstarteinrichtung einsetzbaren Wendestufe;
- Fig. 4: ein einfaches Ablaufdiagramm zur Darstellung eines Ausführungsbeispiels des erfindungsgemäßen Verfahrens zum Betreiben eines Elektromotors;
- Fig. 5: ein Diagramm zur Darstellung des Anlaufens eines mit der erfindungsgemäßen Vorrichtung betriebenen Elektromotors;
- Figuren 6A, 6B, 6C: Signaldiagramme zur Erläuterung der Funktionsweise des erfindungsgemäßen Verfahrens und der erfindungsgemäßen Vorrichtung zum Betreiben eines Elektromotors;
- Fig. 7: ein Signaldiagramm zur Darstellung einer Netzspannung eines dreiphasigen Spannungsversorgungsnetzes;
- Figuren 8A bis 8F: Signaldiagramme zur Erläuterung der Funktionsweise des erfindungsgemäßen Verfahrens und der erfindungsgemäßen Vorrichtung zum Betreiben eines Elektromotors.

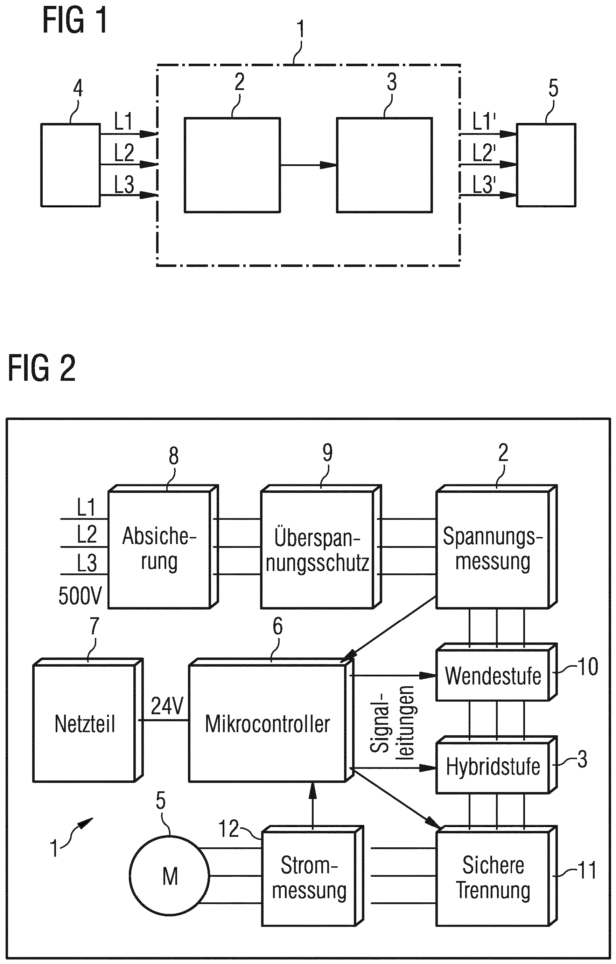

Fig. 1 stellt schematisch eine Vorrichtung 1 zum Betreiben eines Elektromotors 5 dar. Die Vorrichtung 1 umfasst eine Ermittlungseinheit 2 und eine Schalteinheit 3. Die Ermittlungseinheit 2 ermittelt Nulldurchgänge und Phasenwinkel von angelegten phasenverschobenen sinusförmigen Spannungsphasen L eines mehrphasigen Spannungsversorgungsnetzes 4, wie in Fig. 1 darstellt. Die Vorrichtung 1 enthält ferner eine Schalteinheit 3 zum Durchschalten von Halbwellen der angelegten sinusförmigen Spannungsphasen L mittels Halbleiterschaltern entsprechend Schaltmustern, die an die Halbleiterschalter angelegt werden. Diese Schaltmuster sind auf die durch die Ermittlungseinheit 2 ermittelten Nulldurchgänge und Phasenwinkel synchronisiert, wobei sinusformähnliche Spannungsphasen L' erzeugt werden, die direkt an den Elektromotor 5 angelegt werden. Bei dem Elektromotor 5 kann es sich bei einer möglichen Ausführungsform um einen Drehstrom-Asynchronmotor handeln. Dieser Drehstrom-Asynchronmotor 5 besteht aus einem feststehenden Stator oder Ständer und einem sich drehenden Rotor bzw. Läufer. Das mehrphasige Spannungsversorgungsnetzwerk 4 ist vorzugsweise ein dreiphasiges Spannungsversorgungsnetz mit drei Spannungsphasen L1, L2, L3, wie in Fig. 1 dargestellt. Der Stator des Elektromotors 5 besitzt vorzugsweise eine mit Drehstrom gespeiste Dreiphasenwicklung. Zwischen Stator und Rotor besteht keine elektrische Verbindung innerhalb des Elektromotors 5. Der Stator des Drehstrom-Asynchronmotors 5 bildet ein Magnetfeld aus, welches über einen Luftspalt Ströme in dem Rotor des Drehstrom-Asynchronmotors induziert. Vorzugsweise sind sowohl Stator als auch Rotor aus hochmagnetisierbarem Dynamoblech hergestellt. Dies garantiert eine geringe Hysterese und geringe Wirbelstromverluste. Mehrere Einzel-Wicklungen bilden die Statorwicklung des Stators. Diese Einzel-Wicklungen sind vorzugsweise in einem Winkel von etwa 120° zueinander versetzt angeordnet. Der Rotor des Asynchronelektromotors kann bei einer möglichen Ausführungsform aus einem genuteten zylindrischen Läuferblechpaket bestehen. Diese Nuten des Rotors können bei einer möglichen Ausführungsform mit Stäben aus Aluminium gefüllt sein. Durch stirnseitig angebrachte Ringe werden diese Stäbe zu einem geschlossenen Käfig verbunden. Bei einem Drehstrom-Asynchronmotor 5 wird durch das Magnetfeld eine Spannung in dem Rotor induziert.

Fig. 2 zeigt ein Blockschaltbild eines exemplarischen Ausführungsbeispiels für eine erfindungsgemäße Motorstarteinrichtung, welche die Vorrichtung 1 zum Betreiben eines Elektromotors gemäß Fig. 1 verwendet. Wie man aus Fig. 2 erkennen kann, ist bei der dargestellten Vorrichtung 1 eine Steuereinheit 6 vorgesehen, die Schalter der Schalteinheit 3 ansteuert. Bei dem in Fig. 2 dargestellten Ausführungsbeispiel ist die Schalteinheit 3 eine hybride Schalteinheit bzw. eine Hybridstufe, welche mechanische Kontakte aufweist, die parallel zu den Halbleiterschaltern der Schalteinheit 3 verschaltet sind. Die Steuereinheit 6 wird bei einer möglichen Ausführungsform durch einen Mikrocontroller gebildet, der durch ein Netzteil 7 mit einer Versorgungsspannung versorgt wird. Die Motorstarteinrichtung, wie sie in Fig. 2 dargestellt ist, verfügt über Schutzfunktionen zum Schutz des betriebenen Elektromotors 5. Um den Elektromotor 5 sicher zu betreiben, ist er vor Überlast zu schützen und im Kurzschlussfall abzuschalten. Eine Einheit 8 verfügt über Schmelzsicherungen zum Schutz vor Kurzschlussströmen. Ferner ist eine Überspannungsschutzstufe 9 vorgesehen. Dieser nachgeschaltet ist eine Einheit 2 zur Spannungsmessung. Die Einheit 2 dient zur Ermittlung von Nulldurchgängen und Phasenwinkeln der angelegten phasenverschobenen sinusförmigen Spannungsphasen L1, L2, L3 des dreiphasigen Spannungsversorgungsnetzes 4. Die Ermittlungseinheit 2 ist bei dem in Fig. 2 dargestellten Ausführungsbeispiel mit einer Wendestufe 10 für einen Reversierbetrieb verbunden. Diese Wendestufe 10 ist ausgangsseitig mit der Schalteinheit 3 verschaltet, wie in Fig. 2 dargestellt. Die Wendestufe 10 ist optional vorgesehen. Ferner kann die Wendestufe 10 bei einer alternativen Ausführungsform der Schaltstufe 3 nachgeschaltet sein. Die Schalteinheit 3 ist vorzugsweise eine hybride Schalteinheit, welche neben Halbleiterschaltern, insbesondere Leistungshalbleitern, mechanische Kontakte aufweist. Diese mechanischen Kontakte sind parallel zu den Halbleiterschaltern der Schalteinheit 3 verschaltet. Falls die Frequenz f der sinusformähnlichen Spannungsphasen L' die Netzfrequenz des Spannungsversorgungsnetzes 4 beim Anlaufen des Elektromotors 5 erreicht, überbrücken die mechanischen Kontakte die dazu parallel verschalteten Halbleiterschalter der Schalteinheit 3 in einem Dauerbetrieb. Die Halbleiterschalter der hybriden Schalteinheit 3 sind bei einer möglichen Ausführungsform TRIACs. Alternativ können die Halbleiterschalter auch andere Leistungshalbleiter aufweisen, insbesondere Thyristoren oder IGBTs. Bei einer möglichen Ausführungsform der hybriden Schalteinheit 3 werden die schaltenden mechanischen Kontakte jeweils durch ein Relais realisiert. Zu dem Relaiskontakt ist ein Halbleiterschalter, beispielsweise ein TRIAC, parallel geschaltet, welcher im Schaltvorgang das Zünden eines Lichtbogens verhindert. Der mechanische Verschleiß der Relaiskontakte bzw. mechanischen Kontakte wird dadurch erheblich vermindert. Dank der mechanischen Relaiskontakte ist im Dauerbetrieb die Verlustleistung deutlich verringert. Bei hochinduktiven Verbrauchern, insbesondere Elektromotoren oder elektrische Motoren, können aufgrund der Induktivität große bzw. starke Lichtbögen beim Trennen in den Kontakten entstehen. Dies wird bei der Schalteinheit 3 durch die Hybridfunktion verhindert.

Bei einer möglichen Ausführungsform ist der Hybridschaltstufe 3 eine Trennstufe 11 zur sicheren Trennung nachgeschaltet, wie in Fig. 2 dargestellt. Diese Trennstufe 11 umfasst bei einer möglichen Ausführungsform mindestens ein Reihenrelais, welches beispielsweise zur sicheren Trennung der Phase L2 vorgesehen ist. Weiterhin ist, wie in Fig. 2 dargestellt, eine Einheit 12 zur Strommessung vorgesehen, welche den Strom beim Hochlaufen bzw. Anlaufen des Elektromotors 5 misst und an die Steuereinheit bzw. den Mikrocontroller 6 meldet. Durch den gemessenen Strom kann bei einer möglichen Ausführungsform anhand einer Auslösekennlinie ermittelt werden, wann und ab welchem Überstrom der Elektromotor 5 abgeschaltet werden soll. Das Abschalten des Elektromotors 5 erfolgt vorzugsweise bevor dieser Elektromotor 5 durch den überhöhten Strom Schaden nehmen kann.

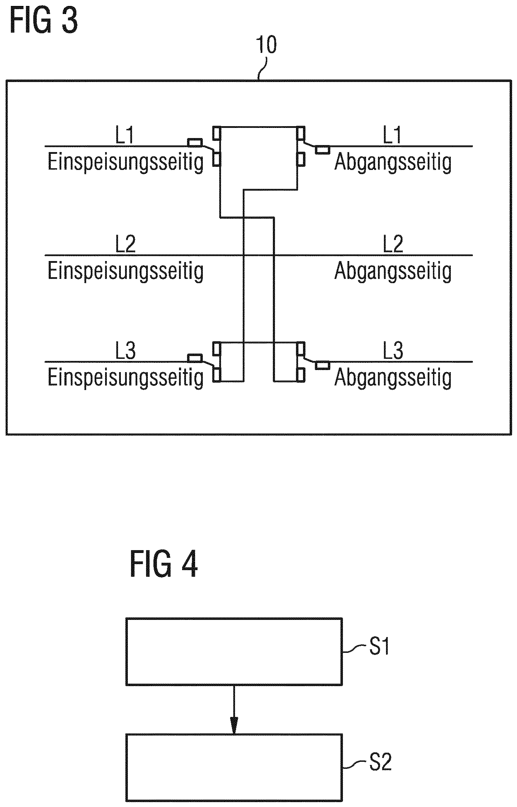

Fig. 3 zeigt ein Schaltbild einer bei der erfindungsgemäßen Vorrichtung einsetzbaren Wendestufe 10. Die Wendestufe 10 bietet eine Wendefunktion und bestimmt durch Vertauschen der Phasen L1 und L3 die Drehrichtung des Elektromotors 5. Die Wendestufe 10 ermöglicht es, die Drehrichtung des Elektromotors 5 einzustellen und ggf. in einen normalen Betrieb zu wechseln. Die Wendestufe 10 sowie die Hybridstufe 3 werden über Steuerleitungen durch die Steuereinheit 6 angesteuert. Dies erfolgt in Abhängigkeit von Signalen, die durch die Ermittlungseinheit 2 und/oder durch die Strommesseinheit 12 an die Steuereinheit 6 übertragen werden.

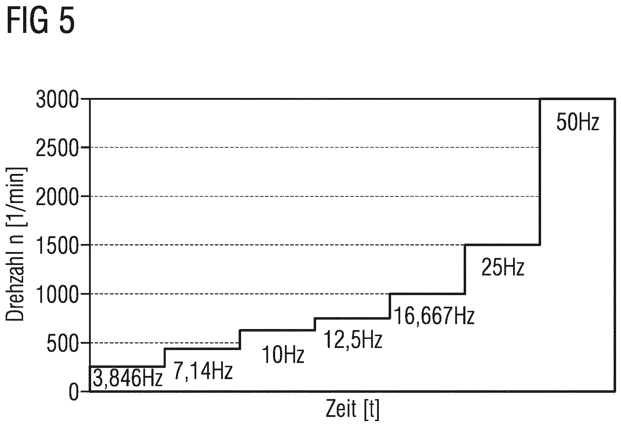

Fig. 5 zeigt ein Signaldiagramm zur Erläuterung der Funktionsweise der erfindungsgemäßen Vorrichtung zum Betreiben eines Elektromotors 5 und der Funktionsweise einer erfindungsgemäßen Motorstarteinrichtung. Fig. 5 zeigt schematisch das Hochlaufen eines zweipoligen Elektromotors 5 über die Zeit, wobei die Drehzahl n des Elektromotors 5 stufenweise zunimmt. Für jede Phase L des Stromversorgungsnetzes 4 ist in der hybriden Schalteinheit 3 ein Leistungshalbleiter verbaut, beispielsweise ein TRIAC. Mithilfe dieses Halbleiterschalters wird der Spannungsverlauf derart beeinflusst, dass nur bestimmte Teile der sinusförmigen Spannungsphasen durchgeschaltet werden. Damit der Elektromotor 5 gleichmäßig dreht, weisen die drei Phasen des Drehstromnetzes L1, L2, L3 zueinander einen Phasenwinkel von etwa 120° auf. Dabei ist auch die Reihenfolge der Spannungsphasen von Bedeutung, da diese den Drehsinn des Elektromotors 5 bestimmen. Bei dem erfindungsgemäßen Verfahren und der erfindungsgemäßen Vorrichtung werden mittels Halbwellen der angelegten sinusförmigen Spannungsphasen L mit einer vorgegebenen Netzfrequenz von beispielsweise 50 Hz sinusformähnliche Spannungsphasen L' erzeugt, die den sinusförmigen Spannungsphasen mit niedriger Frequenz entsprechen. Es werden Signalabschnitte bzw. Halbwellen der sinusförmigen Signalphasen L in Abhängigkeit von Schaltmustern durchgeschaltet und bilden sinusformähnliche Spannungsphasen L', deren Frequenz ein Bruchteil der Netzfrequenz f₀ ist. Die erzeugten zueinander phasenverschobenen sinusformähnlichen Spannungsphasen L' weisen untereinander dabei die gleiche Frequenz f auf, welche ein Bruchteil der Netzfrequenz f₀ des mehrphasigen Spannungsversorgungsnetzes 4 ist. Wie aus dem in Fig. 5 dargestellten Diagramm erkennbar, wird bei dem dargestellten Ausführungsbeispiel zunächst eine sinusformähnliche Spannungsphase L' mit einer Frequenz f von 3,846 Hz erzeugt, die einem Siebtel der Netzfrequenz f₀ von 50 Hz entspricht. Anschließend wird eine sinusformähnliche Spannungsphase L' mit einer 7,14 Hz Sinusspannung erzeugt, d.h. mit einer Frequenz, die einem Sechstel der normalen Netzfrequenz f₀ entspricht. Die erzeugten phasenverschobenen sinusformähnlichen Spannungsphasen L', d.h. L1', L2', weisen während jeder Schaltphase untereinander die gleiche Frequenz auf, welche einem Bruchteil der Netzfrequenz f₀ = 50 Hz des mehrphasigen Spannungsversorgungsnetzes 4 entspricht. In der ersten Schaltstufe gemäß Fig. 5 weisen somit alle drei untereinander phasenverschobenen sinusformähnlichen Spannungsphasen L1', L2', L3' eine Netzfrequenz von 3,846 Hz auf, d.h. ein 13-tel der Netzfrequenz. In der zweiten Schaltphase weisen die drei phasenverschobenen sinusformähnlichen Spannungsphasen L1', L2', L3' die gleiche Frequenz, nämlich 7,14 Hz, auf, d.h. ein Siebtel der Netzfrequenz usw. Die Frequenz f der sinusformähnlichen Spannungsphasen L1', L2', L3' wird zum Anlaufen des Elektromotors 5 stufenweise durch Umschalten der an die Halbleiterschalter der Schalteinheit 3 angelegten Schaltmuster hochgeschaltet, bis die Netzfrequenz f₀ = 50 Hz des Spannungsversorgungsnetzes 4 erreicht wird. Bei dem in Fig. 5 dargestellten Ausführungsbeispiel erfolgt das Anlaufen des Elektromotors 5 in sieben Schaltphasen, wobei in jeder Schaltphase die Frequenz der sinusformähnlichen Spannungsphasen L1' hochgeschaltet wird, nämlich von 3,84 Hz auf 7,14 Hz, auf 10 Hz, auf 12,5 Hz, auf 16,67 Hz, auf 25 Hz und schließlich auf 50 Hz. Mit diesem stufenweise stattfindenden Hochlaufen der Drehzahl, wie in Fig. 5 dargestellt, ist es möglich, den Elektromotor 5 sanft zu starten. Hierdurch reduzieren sich auch die Anlaufströme. Die Schalter der Schalteinheit 3 werden vorzugsweise durch galvanisch getrennte Leistungshalbleiter, insbesondere TRIACs, gebildet, die entsprechend einem aus einem Datenspeicher ausgelesenen Schaltmuster angesteuert werden. Bei einer möglichen Ausführungsform hat die Steuereinheit 6 bzw. der Mikrocontroller Zugriff auf einen derartigen Datenspeicher, in welchem vorgegebene Schaltmuster abgelegt sind. Bei einer möglichen Ausführungsform befindet sich ein programmierbarer Datenspeicher in der Schalteinheit 6 und kann über eine Schnittstelle mit entsprechenden Schaltmustern programmiert werden. Nach Erreichen der Netzfrequenz f₀ = 50 Hz des Spannungsversorgungsnetzes 4 wird der Elektromotor 5 vorzugsweise über mechanische Kontakte, die parallel zu den Halbleiterschaltern der Schalteinheit 3 verschaltet sind, direkt mit Spannungsphasen L versorgt. Beim Umschalten der an die Halbleiterschalter der Schalteinheit 3 angelegten Schaltmuster wird der Drehsinn eines Drehfeldes zum Antreiben des Elektromotors 5 beibehalten. Die sinusformähnlichen Spannungsphasen L' weisen zueinander jeweils einen Phasenwinkel von 120° auf.

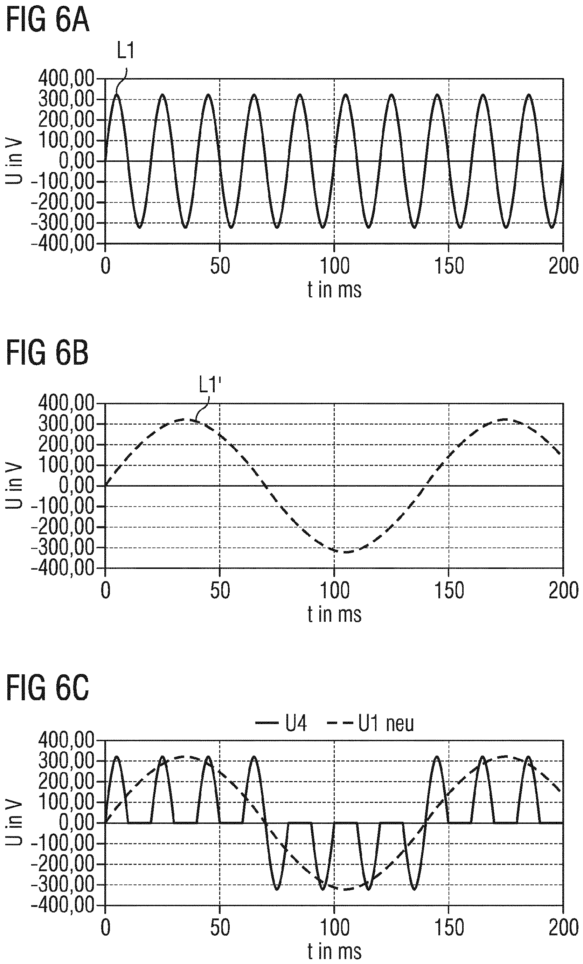

Figuren 6A, 6B, 6C dienen zur Verdeutlichung der Funktionsweise des erfindungsgemäßen Verfahrens und der erfindungsgemäßen Vorrichtung zum Betreiben eines Elektromotors. In Fig. 6A ist eine unbeeinflusste 50 Hz-Netzspannung eines Spannungsversorgungsnetzes 4 zu sehen. Die Periodendauer beträgt dabei 20 msec und die Spannungsphase L ist ein gleichmäßig sinusförmiges Signal, wie in Fig. 6A erkennbar. Fig. 6B zeigt eine gewünschte sinusförmige Spannung mit einer Frequenz von 7,14 Hz, d.h. einem Siebtel der Netzfrequenz. Die Periodendauer beträgt hierbei 140 msec. Um aus der sinusförmigen Spannungsphase L des Spannungsversorgungsnetzes 4 eine sinusformähnliche Spannungsphase L' zu generieren, welche eine Frequenz von 7,14 Hz aufweist, werden Schaltmuster verwendet, wie in Fig. 6C dargestellt. Das Schaltmuster U4 für 7,14 Hz umfasst viermal eine positive und viermal eine negative Halbwelle, wie in Fig. 6C dargestellt. Aus diesen acht Halbwellen entsteht eine Nachbildung der gewünschten sinusförmigen Spannung U1neu mit einer Frequenz von 7,14 Hz. Bei einer möglichen Ausführungsform werden zur Optimierung die erste Halbwelle und/oder die letzte Halbwelle der sinusformähnlichen Spannungsphase L, die mittels eines Leistungshalbleiters, beispielsweise TRIAC, entsprechend dem angelegten Schaltmuster durchgeschaltet wird, zur Erzeugung der sinusformähnlichen Spannungsphase L1' angeschnitten. Bei dem in Fig. 6C dargestellten Beispiel kann jeweils die erste und letzte Halbwelle von jedem Halbwellenpaket mit einer Phase von 90° angeschnitten werden. Hierdurch wird der Spannungsverlauf noch ähnlicher zu einem sinusförmigen Spannungsverlauf.

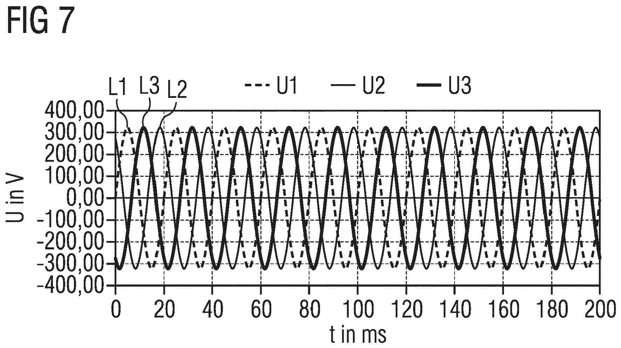

Fig. 7 zeigt schematisch die von einem dreiphasigen Spannungsversorgungsnetz 4 bereitgestellten sinusförmigen Spannungsphasen L1, L2, L3, die jeweils zueinander um 120° phasenverschoben sind und die Schaltmuster U1, U2, U3.

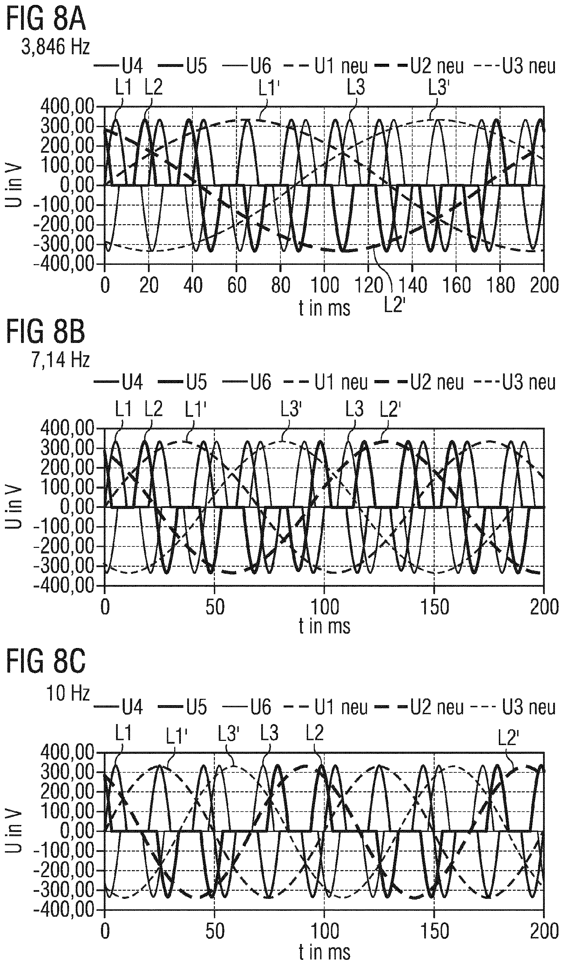

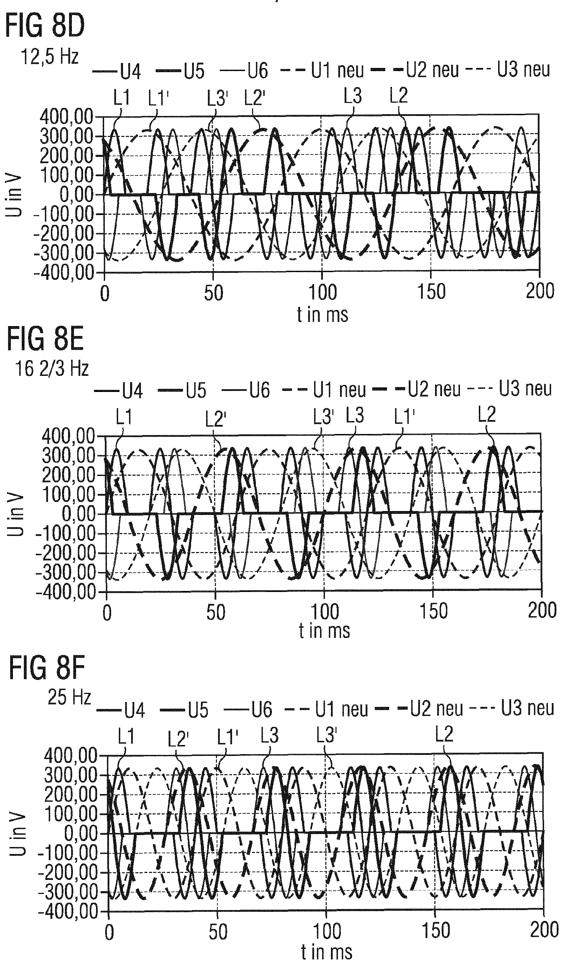

Figuren 8A bis 8F verdeutlichen die mit dem erfindungsgemäßen Verfahren und der erfindungsgemäßen Vorrichtung erzeugten sinusformähnlichen Spannungsphasen L' für die verschiedenen Schaltphasen und die dabei verwendeten Schaltmuster U4, U5, U6, sowie die sinusförmigen Spannungen U1neu, U2neu, U3neu. Fig. 8A zeigt die erste Schaltphase zur Erzeugung sinusformähnlicher Spannungsphasen L' mit einer Frequenz von 3,846 Hz, d.h. einem 13-tel der Netzfrequenz f₀ = 50 Hz. Fig. 8B zeigt die sinusformähnlichen Spannungsphasen L' mit einer Frequenz von 7,14 Hz, d.h. einem Siebtel der Netzfrequenz, in der zweiten Schaltphase zum Anlaufen des Elektromotors 5. Fig. 8C zeigt die sinusformähnlichen Spannungsphasen in der dritten Schaltphase, welche eine Frequenz von 10 Hz, d.h. einem Fünftel der Netzfrequenz f₀, aufweisen. Fig. 8D zeigt die sinusformähnlichen Spannungsphasen in der vierten Schaltphase mit einer Frequenz von 12,5 Hz, d.h. einem Viertel der Netzfrequenz f₀. Fig. 8E zeigt die sinusformähnlichen Spannungsphasen in der fünften Schaltphase mit einer Frequenz von 16²/₃ Hz, d.h. einem Drittel der Netzfrequenz f₀. Fig. 8F zeigt die sinusformähnlichen Spannungsphasen L' in der sechsten Schaltphase mit einer Frequenz von 25 Hz, d.h. der halben Netzfrequenz f₀.

Mit dem erfindungsgemäßen Verfahren und der erfindungsgemäßen Vorrichtung werden aus rein sinusförmigen Spannungsphasen L des öffentlichen dreiphasigen Spannungsversorgungsnetzes 4 sinusformähnliche Spannungsphasen L1' erzeugt, die direkt an den Elektromotor 5 angelegt werden. Die erfindungsgemäße Vorrichtung benötigt weder einen DC-Zwischenkreis noch einen Energiespeicher.

Fig. 4 zeigt schematisch ein Ausführungsbeispiel des erfindungsgemäßen Verfahrens zum Betreiben eines Elektromotors 5.

In einem ersten Schritt S1 werden Nulldurchgänge und Phasenwinkel von angelegten phasenverschobenen sinusförmigen Spannungsphasen L eines mehrphasigen Spannungsversorgungsnetzes 4, insbesondere eines dreiphasigen Spannungsversorgungsnetzes, ermittelt.

In einem weiteren Schritt S2 werden Halbwellen von angelegten sinusförmigen Spannungsphasen L mittels Halbleiterschaltern entsprechend an die Halbleiterschalter angelegter Schaltmuster durchgeschaltet, die auf die ermittelten Phasenwinkel und Nulldurchgänge synchronisiert werden, wobei phasenverschobene sinusformähnliche Spannungsphasen L' erzeugt werden, die direkt an den Elektromotor 5 angelegt werden. Mit dem erfindungsgemäßen Verfahren werden beim Starten bzw. Anlauf eines Elektromotors 5 die Anlaufströme reduziert. Darüber hinaus erfolgt der Anlauf des Elektromotors 5 in schonender Weise. Mit dem erfindungsgemäßen Verfahren ist es beispielsweise möglich, IE3-Motoren mit begrenzten Anlaufströmen zu betreiben. Mit der erfindungsgemäßen Vorrichtung können auch IE2-Elektromotoren betrieben werden. Mit der erfindungsgemäßen Vorrichtung kann eine elektronische Schaltung (Frequenzstellerschaltung) eingesetzt werden, welche aus dem öffentlichen Dreiphasen-Stromversorgungsnetz definierte Abschnitte entnimmt und der Last bzw. dem Elektromotor zuführt. In den Hauptstromkreisen der Frequenzstellerschaltung sind dabei keine Verbindungen zwischen den Stromphasen vorhanden, sodass im Fehlerfall das öffentliche Stromversorgungsnetz nicht gestört wird. Die erfindungsgemäße Vorrichtung verwendet vorzugsweise die Hybridtechnik. Dabei werden die Schaltvorgänge durch Halbleiterelemente ausgeführt, während Dauerströme durch mechanische Kontakte geführt werden.

## Patentansprüche

1. Verfahren zum Betreiben eines Elektromotors (EM) mit den Schritten:
(a) Ermitteln (S1) von Nulldurchgängen und Phasenwinkeln von angelegten phasenverschobenen sinusförmigen Spannungsphasen (L) eines mehrphasigen Spannungsversorgungsnetzes (4); und
(b) Durchschalten (S2) von Halbwellen der angelegten sinusförmigen Spannungsphasen (L) mittels Halbleiterschaltern entsprechend an die Halbleiterschalter angelegter Schaltmuster, die auf die ermittelten Phasenwinkel und Nulldurchgänge synchronisiert werden, zum Erzeugen von phasenverschobenen sinusformähnlichen Spannungsphasen (L'), die direkt an den Elektromotor (5) angelegt werden, wobei die Frequenz (f) der sinusformähnlichen Spannungsphasen (L') zum Anlaufen des Elektromotors (5) stufenweise durch Umschalten der an die Halbleiterschalter angelegten Schaltmuster hochgeschaltet wird, bis die Netzfrequenz (f₀) des Spannungsversorgungsnetzes erreicht wird, wobei nach Erreichen der Netzfrequenz (f₀) des Spannungsversorgungsnetzes der Elektromotor (5) über mechanische Kontakte, die parallel zu den Halbleiterschaltern verschaltet sind, direkt durch das Spannungsversorgungsnetz versorgt wird.

2. Verfahren nach Anspruch 1,
wobei die erzeugten phasenverschobenen sinusformähnlichen Spannungsphasen (L') untereinander die gleiche Frequenz (f) aufweisen, welche ein Bruchteil der Netzfrequenz (f₀) des mehrphasigen Spannungsversorgungsnetzes ist.

3. Verfahren nach einem der vorangehenden Ansprüche 1 bis 2, wobei die Halbleiterschalter durch galvanisch vom Netz getrennte Leistungshalbleiter gebildet werden, die entsprechend einem aus einem Datenspeicher ausgelesenen Schaltmuster angesteuert werden.

4. Verfahren nach Anspruch 3,
wobei die erste Halbwelle und/oder die letzte Halbwelle einer sinusförmigen Spannungsphase (L), die mittels des Halbleiterschalters entsprechend dem angelegten Schaltmuster durchgeschaltet wird, zur Erzeugung der sinusformähnlichen Spannungsphase (L') angeschnitten wird.

5. Verfahren nach einem der vorangehenden Ansprüche 1 bis 4, wobei die sinusformähnlichen Spannungsphasen (L') zueinander einen Phasenwinkel von jeweils 120° aufweisen.

6. Verfahren nach einem der vorangehenden Ansprüche 1 bis 5, wobei beim Umschalten der an die Halbleiterschalter angelegten Schaltmuster der Drehsinn eines Drehfeldes zum Antrieb des Elektromotors (5) beibehalten wird.

7. Vorrichtung (1) zum Betreiben eines Elektromotors (EM) mit:
einer Ermittlungseinheit (2) zur Ermittlung von Nulldurchgängen und Phasenwinkeln von angelegten phasenverschobenen sinusförmigen Spannungsphasen (L) eines mehrphasigen Spannungsversorgungsnetzes (4); und
einer Schalteinheit (3) zum Durchschalten von Halbwellen der angelegten sinusförmigen Spannungsphasen (L) mittels Halbleiterschaltern entsprechend an die Halbleiterschalter angelegter Schaltmuster, die auf die ermittelten Nulldurchgänge und Phasenwinkel synchronisiert sind, zum Erzeugen von phasenverschobenen sinusformähnlichen Spannungsphasen (L'), die direkt an den Elektromotor (5) angelegt werden, wobei die Schalteinheit (3) eine hybride Schalteinheit ist, die mechanische Kontakte aufweist, welche parallel zu den Halbleiterschaltern der Schalteinheit verschaltet sind,
wobei eine Steuereinheit (6) vorgesehen ist, die Halbleiterschalter der Schalteinheit (3) entsprechend den aus einem Datenspeicher ausgelesenen Schaltmustern ansteuert, wobei die Frequenz (f) der sinusformähnlichen Spannungsphasen (L') zum Anlaufen des Elektromotors (5) stufenweise durch Umschalten der an die Halbleiterschalter angelegten Schaltmuster durch die Schalteinheit (3) hochgeschaltet wird, bis die Netzfrequenz (f₀) des Spannungsversorgungsnetzes erreicht wird, wobei nach Erreichen der Netzfrequenz (f₀) des Spannungsversorgungsnetzes der Elektromotor (5) über die mechanischen Kontakte, direkt durch das Spannungsversorgungsnetz (4) versorgt wird.

8. Vorrichtung nach Anspruch 7,
wobei sobald die Frequenz der sinusformähnlichen Spannungsphasen (L') die Netzfrequenz (f₀) des Spannungsversorgungsnetzes beim Anlaufen des Elektromotors (5) erreicht, die mechanischen Kontakte die dazu parallel verschalteten Halbleiterschalter der Schalteinheit (3) in einem Dauerbetrieb überbrücken.

9. Vorrichtung nach einem der vorangehenden Ansprüche 7 bis 8,
wobei eine Wendestufe (10) zur Einstellung des Drehsinns eines Drehfeldes zum Antrieb des Elektromotors (5) vorgesehen ist.

10. Vorrichtung nach einem der vorangehenden Ansprüche 7 bis 9,
wobei eine Überlastschutzstufe vorgesehen ist.

11. Motorstarteinrichtung zum Starten eines Elektromotors (5) mit einer Vorrichtung (1) nach einem der vorangehenden Ansprüche 7 bis 10.

## Claims

1. Method for operating an electric motor (EM), comprising the steps of:
(a) detecting (S1) zero crossings and phase angles of applied phase-shifted sinusoidal voltage phases (L) of a multi-phase voltage supply network (4); and
(b) connecting (S2) half-waves of the applied sinusoidal voltage phases (L) through by means of semiconductor switches, in accordance with switching patterns which are applied to the semiconductor switches and which are synchronised with the detected phase angles and zero crossings, to generate phase-shifted sinusoid-like voltage phases (L') which are applied directly to the electric motor (5), the frequency (f) of the sinusoid-like voltage phases (L') being shifted upwards incrementally, for starting up the electric motor (5), by changing over the switching pattern applied to the semiconductor switch, until the network frequency (f₀) of the voltage supply network is reached, the electric motor (5) being supplied directly by the voltage supply network, via mechanical contacts connected in parallel with the semiconductor switches, after the network frequency (f₀) of the voltage supply network is reached.

2. Method according to claim 1,
wherein the generated phase-shifted sinusoid-like voltage phases (L') have the same frequency (f) as one another, which is a fraction of the network frequency (f₀) of the multi-phase voltage supply network.

3. Method according to any of preceding claims 1 to 2,
wherein the semiconductor switches are formed by power semiconductors, which are galvanically separated from the network and are actuated in accordance with a switching pattern read out from a data memory.

4. Method according to claim 3,
wherein the first half-wave and/or the last half-wave of a sinusoidal voltage phase (L) which is connected through by means of the semiconductor switch, in accordance with the applied switching pattern, is truncated to generate the sinusoid-like voltage phase (L').

5. Method according to any of preceding claims 1 to 4,
wherein the sinusoid-like voltage phases (L') are each at a phase angle of 120° to one another.

6. Method according to any of preceding claims 1 to 5,
wherein when the switching pattern applied to the semiconductor switches is changed over the direction of rotation of a rotary field for driving the electric motor (5) is maintained.

7. Device (1) for operating an electric motor (EM), having:
a detection unit (2) for detecting zero crossings and phase angles of applied phase-shifted sinusoidal voltage phases (L) of a multi-phase voltage supply network (4); and
a switching unit (3) for connecting half-waves of the applied sinusoidal voltage phases (L) through by means of semiconductor switches, in accordance with switching patterns which are applied to the semiconductor switches and which are synchronised with the detected phase angles and zero crossings, to generate phase-shifted sinusoid-like voltage phases (L') which are applied directly to the electric motor (5), the switching unit (3) being a hybrid switching unit which has mechanical contacts connected in parallel with the semiconductor switches of the switching unit,
a control unit (6) being provided which actuates semiconductor switches of the switching unit (3) in accordance with the switching patterns read out from a data memory,
the frequency (f) of the sinusoid-like voltage phases (L') being shifted upwards incrementally by the switching unit (3), for starting up the electric motor (5), by changing over the switching pattern applied to the semiconductor switch, until the network frequency (f₀) of the voltage supply network is reached, the electric motor (5) being supplied directly by the voltage supply network (4), via mechanical contacts, after the network frequency (f₀) of the voltage supply network is reached.

8. Device according to claim 7,
wherein, once the frequency of the sinusoid-like voltage phases (L') reaches the network frequency (f₀) of the voltage supply network during the start-up of the electric motor (5), the mechanical contacts bridge the semiconductor switches of the switching unit (3) which are connected in parallel therewith, in continuous operation.

9. Device according to any of preceding claims 7 to 8,
wherein a turning stage (10) is provided for setting the direction of rotation of a rotary field for driving the electric motor (5).

10. Device according to any of preceding claims 7 to 9,
wherein a surge protection stage is provided.

11. Motor starter device for starting an electric motor (5), comprising a device (1) according to any of preceding claims 7 to 10.

## Revendications

1. Procédé de fonctionnement d'un système de moteur électrique (EM) comportant les étapes de :
(a) détermination (S1) de passages par zéro et d'angles de phase de phases de tension sinusoïdales déphasées (L) appliquées d'un réseau d'alimentation en tension multiphasé (4) ;
(b) transmission (S2) des alternances des phases de tension sinusoïdales (L) appliquées au moyen de commutateurs à semi-conducteurs selon des schémas de commutation appliqués aux commutateurs à semi-conducteurs, lesquels sont synchronisés sur les angles de phase et les passages par zéro déterminés, afin de générer des phases de tension analogues à une sinusoïde et déphasées (L') directement appliquées au moteur électrique (5), dans lequel la fréquence (f) des phases de tension analogues à une sinusoïde (L') est augmentée progressivement par commutation des schémas de commutation appliqués aux commutateurs à semi-conducteurs pour le démarrage du moteur électrique (5), jusqu'à ce que la fréquence réseau (f₀) du réseau d'alimentation en tension soit atteinte, dans lequel après que la fréquence réseau (f₀) du réseau d'alimentation en tension est atteinte, le moteur électrique (5) est alimenté directement par le réseau d'alimentation en tension par le biais de contacts mécaniques, lesquels sont interconnectés en parallèle aux commutateurs à semi-conducteurs.

2. Procédé selon la revendication 1,
dans lequel les phases de tension analogues à une sinusoïde et déphasées (L') générées présentent la même fréquence (f) l'une par rapport à l'autre, laquelle est une fraction de la fréquence réseau (f₀) du réseau d'alimentation en tension multiphasé.

3. Procédé selon l'une des revendications précédentes 1 à 2, dans lequel les commutateurs à semi-conducteurs sont formés par des semi-conducteurs de puissance galvaniquement séparés du réseau, lesquels sont pilotés selon un schéma de commutation lu à partir d'une mémoire de données.

4. Procédé selon la revendication 3,
dans lequel la première alternance et/ou la dernière alternance d'une phase de tension sinusoïdale (L), laquelle est transmise au moyen du commutateur à semi-conducteurs selon le schéma de commutation appliqué, est découpée afin de générer les phases de tension analogues à une sinusoïde (L').

5. Procédé selon l'une des revendications précédentes 1 à 4, dans lequel les phases de tension analogues à une sinusoïde (L') présentent l'une par rapport à l'autre un angle de phase respectif de 120°.

6. Procédé selon l'une des revendications précédentes 1 à 5, dans lequel, lors de la commutation du schéma de commutation appliqué au commutateur à semi-conducteurs, le sens de rotation d'un champ tournant est conservé pour l'entraînement du moteur électrique (5).

7. Dispositif (1) de fonctionnement d'un moteur électrique (EM) comportant :
une unité de détermination (2) permettant de déterminer les passages par zéro et les angles de phase de phases de tension sinusoïdales déphasées (L) appliquées d'un réseau d'alimentation en tension multiphasé (4) ; et
une unité de commutation (3) pour transmettre les alternances des phases de tension sinusoïdales (L) appliquées au moyen de commutateurs à semi-conducteurs selon des schémas de commutation appliqués aux commutateurs à semi-conducteurs, lesquels sont synchronisés sur les angles de phase et les passages par zéro déterminés, afin de générer des phases de tension analogues à une sinusoïde et déphasées (L') directement appliquées au moteur électrique (5), dans lequel l'unité de commutation (3) est une unité de commutation hybride comportant des contacts mécaniques, lesquels sont interconnectés en parallèle aux commutateurs à semi-conducteurs de l'unité de commutation,
dans lequel une unité de commande (6) est prévue, laquelle pilote les commutateurs à semi-conducteurs de l'unité de commutation (3) selon les schémas de commutation lus à partir d'une mémoire de données, dans lequel la fréquence (f) des phases de tension analogues à une sinusoïde (L') est augmentée progressivement par commutation des schémas de commutation appliqués aux commutateurs à semi-conducteurs pour le démarrage du moteur électrique (5), jusqu'à ce que la fréquence réseau (f₀) du réseau d'alimentation en tension soit atteinte, dans lequel après que la fréquence réseau (f₀) du réseau d'alimentation en tension est atteinte, le moteur électrique (5) est alimenté directement par le réseau d'alimentation en tension (4) par le biais de contacts mécaniques.

8. Dispositif selon la revendication 7,
dans lequel, dès que la fréquence des phases de tension analogues à une sinusoïde (L') atteint la fréquence réseau (f₀) du réseau d'alimentation en tension lors du démarrage du moteur électrique (5), les contacts mécaniques pontent les commutateurs à semi-conducteurs interconnectés en parallèle à ceux-ci de l'unité de commutation (3) dans un fonctionnement continu.

9. Dispositif selon l'une des revendications précédentes 7 à 8, dans lequel un étage de renversement (10) est prévu pour régler le sens de rotation d'un champ tournant permettant l'entraînement du moteur électrique (5).

10. Dispositif selon l'une des revendications précédentes 7 à 9, dans lequel est prévu un étage de protection contre les surcharges.

11. Système de démarrage moteur permettant de démarrer un moteur électrique (5) comportant un dispositif (1) selon l'une des revendications précédentes 7 à 10.
